# EUROPEAN PATENT APPLICATION

(11) **EP 3 293 945 A1**
(43) Date of publication of application: **14.03.2018**
(21) Application number: 17190001.2
(22) Date of filing: 07.09.2017
(51) Int. Cl.: H04L 29/08, H04L 12/28, H04M 1/60, B60R 1/12

(54) **FACILITATING COMMUNICATIONS BETWEEN A COMPUTING DEVICE AND AN ON-BOARD SYSTEM**

(30) Priority: 07.09.2016 US 201662384298 P; 06.09.2017 US 201715696737
(71) Applicant: Thunder Power New Energy Vehicle Development Company Limited, Central, Hong Kong (CN)
(72) Inventor: GALEOTTI, Alessandro, Central Hong Kong (CN)
(74) Representative: Sadler, Peter Frederick

(57) **Abstract**

In one aspect, embodiments can enable a passenger to connect his/her computing device wirelessly to a transportation apparatus to a display within the transportation apparatus. The portable device may be so connected outside the transportation apparatus, for example at the user's office or the user's home. After the passenger connects the computing device to the display in the transportation apparatus, the user may be enabled to control the computing device by providing inputs through the display. In some embodiments, the user may be enabled to control one or more in-vehicle devices through the computing device after it is connected to the passenger display.

## Description

### CROSS-REFERENCE TO RELATED APPLICATION

The present application claims the benefit of and priority to U.S. Provisional Application No. 62/384,298, filed September 7, 2016, which is hereby incorporated by reference in its entirety for all purposes.

### BACKGROUND OF THE INVENTION

This invention generally relates to in-vehicle communications.

The number and complexity of driver-controllable in-vehicle devices has grown rapidly in the last several years and is anticipated to further increase in the future. Such devices include audio systems, televisions, telephones, air conditioners, GPS, Internet browsers and other Internet or wireless communication-based systems. Many functions that are not directly manipulated by the driver, e.g. engine temperature, are displayed on a dashboard and are monitored by the driver and passenger(s) if necessary. The driver can choose actions in response to such displays. While some in-vehicle devices are positioned to be controllable by the passenger(s) such as in-vehicle climate control, most in-vehicle devices are usually designed and positioned to be used and controlled by the driver.

Developments in liquid crystal display (LCD) technology have made free-form display on a dashboard a reality. Equipped with the new free-form display technology, a dashboard screen can be snipped and shaped to fit virtually any layout design on a dashboard and to fill the entire surface area of the dashboard. The free-form display's flexibility makes it possible to provide suitable displays to passengers in a vehicle.

Technologies that enable a driver to connect his/her smart phone to a dashboard display have emerged to replace traditional pre-configured in-vehicle infotainment system. For example, Android Auto and Apple CarPlay allow the driver to connect his/her smart phone to use apps on the smart phone through the dashboard display. However, both Android Auto and Apple CarPlay are designed for the driver. Therefore, there is a need to enable a passenger to connect his/her smart phone to an in-vehicle passenger display to perform various functions suitable for the passenger.

### BRIEF SUMMARY OF THE INVENTION

In one aspect, embodiments can enable a passenger to connect his/her computing device wirelessly to a transportation apparatus to a display within the transportation apparatus. The portable device may be so connected outside the transportation apparatus, for example at the user's office or the user's home. After the passenger connects the computing device to the display in the transportation apparatus, the user may be enabled to control the computing device by providing inputs through the display. In some embodiments, the user may be enabled to control one or more in-vehicle devices through the computing device after it is connected to the passenger display.

This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings, and each claim.

The foregoing, together with other features and embodiments, will become more apparent upon referring to the following specification, claims, and accompanying drawings.

### BRIEF DESCRIPTION OF THE DRAWINGS

FIG. 1 generally illustrates a passenger is enabled to connect his/her portable device to a passenger display provided in a driving apparatus.
FIGS. 2 illustrates an example of connecting a computing device associated with a user, such as passenger of the transportation apparatus shown in FIG. 1 in accordance with the disclosure
FIG. 3 that illustrates a server 300 that can be employed to facilitate remote displaying a content of the computing device 202 on display 110a or 103 in accordance with the disclosure
FIG. 4 illustrates one example for facilitating displaying a content of a computing device in a transportation apparatus.
FIG. 5 illustrates a simplified computer system that can be used to implement various embodiments

### DETAILED DESCRIPTION OF THE INVENTION

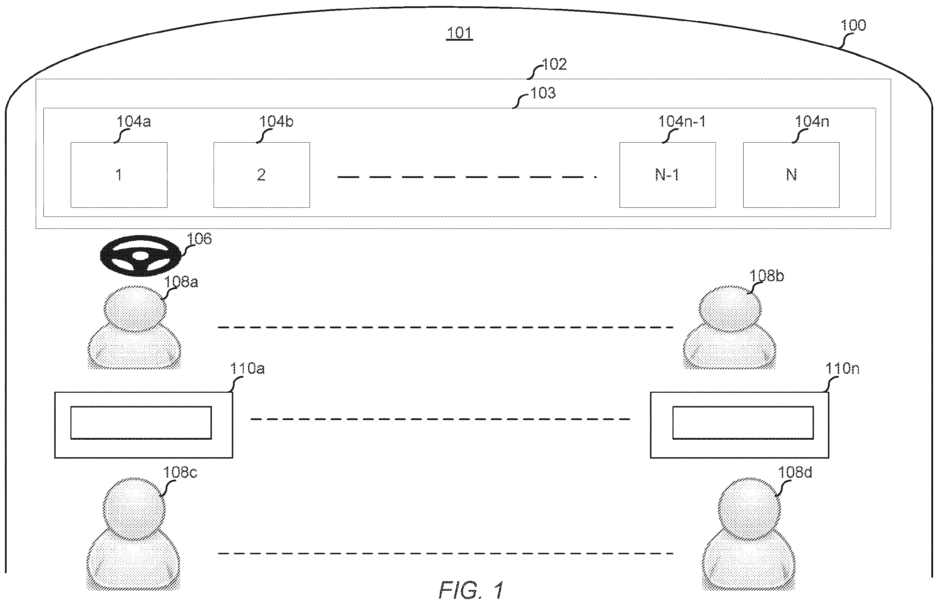

FIG. 1 generally illustrates an embodiment enabling a passenger to connect his/her portable device to a passenger display provided in a transportation apparatus 100. The transportation apparatus 100 may include any apparatus that moves in distance. Examples of transportation apparatus 100 may include a vehicle such as a car, a bus, a train, a truck, a tram, or any other type of vehicle; may include a vessel such as a boat, a ship, a barge, a ferry or any other type of watercraft; may include an aircraft such as an airplane, a spaceship, or any other type of aircraft; or may include any other transportation apparatus. In one example, the transportation apparatus 100 is an electrical automobile. As shown, the transportation apparatus 100 may include a cabin 101 with a volume.

As shown in FIG. 1, in the cabin 101, there may be a dashboard 102 that has a screen 103. Although in this example, a dashboard screen 103 occupies the entire surface of the dashboard 102, this is not intended to be limiting. It is contemplated that in some cases, the dashboard screen 103 may occupy a portion of the dashboard 102 instead of the entire dashboard 102. In any case, the dashboard screen 103 is suitable to display one or more information panels, such as the information panels 104 shown in FIG. 1. In implementations, the dashboard screen 103 may include any display technology, such as liquid-crystal display (LCD), crystal LCD, light-emitting diode (LED), organic light-emitting diode (OLED), active-matrix organic light-emitting diode (AMOLED), Plasma, projection panel, cathode ray tube (CRT), and/or any other display technology. As also shown, the information panels 104 displayed on the dashboard screen 103 are separate and independent from each other such that the individual information panels 104 are displayed at corresponding positions on the dashboard screen 103. In this example, information panel 104a is displayed at position 1 on the dashboard screen 103, information panel 104b is displayed at position 2 on the dashboard screen 103, information panel 104n-1 is displayed at position N-1 on the dashboard screen 103, and information panel 104n is displayed at position N on the dashboard screen 103.

In some examples, information presented in the information panels 104 may include gauge information related to the transportation apparatus 100, such as current speed/altitude/direction/wind, current longitude/latitude, distance traveled, RPM, fuel level, battery level, and/or any other gauge information related to the transportation apparatus 100. In some examples, information presented in the information panels 104 may include indication information, such as seat belt, airbag, door, trunk, maintenance, safety, window lock, door lock indication information or any other indication information. In some examples, information presented in the information panels 104 may include navigational or GPS information related to navigation of the transportation apparatus 100, such as current street traveled on, map of an area the transportation apparatus 100 is traveling in, the destination information, direction instructions, traffic condition, estimated arrival time, estimated delay due to traffic, and/or any other navigation information. In some examples, information presented in the information panels 104 may include cabin information, such as current temperature, humidity, wind speed, number of passengers in one or more zones in the cabin 101 and/or any other cabin information. In some examples, information presented in the information panels 104 may include configuration information regarding the transportation apparatus 100, such as seat configuration, mirror configuration, battery configuration, driving mode configuration, and/or any other configuration. In some examples, information presented in the information panels 104 may include entertainment information. For example, such an information panel may include a video screen capable of presenting a video or still images, a browser screen capable of presenting web information, a game screen capable of presenting one or more games for user interaction, a music information screen capable of enabling a user to consume music pieces, e-commerce information screen capable of enabling a user to engage remote transaction via the Internet, radio information screen capable of presenting a list of radio stations available for user consumption, and/or any other type of infotainment screen. In some examples, information presented in the information panels 104 may include notification information such as incoming call, incoming text message, incoming video chat request, and/or any other notification information. Other examples of information panels 104 are contemplated.

As still shown in FIG. 1, the transportation apparatus 100 may comprise one or more steering wheels 106 in the cabin 101. Although only one steering wheel 106 is shown in FIG. 1, this is not intended to be limiting. In some examples, the transportation apparatus 100 may include more than one steering wheel 106. For example, it is contemplated that the transportation apparatus 100 may be an aircraft that comprises at least a main steering wheel 106 for the main pilot and at least a secondary steering wheel 106 for a co-polit.

As also shown in FIG. 1, one or more users 108 may be arranged to occupy their corresponding positions in the cabin 101. The users 108 may include one or more drivers that control the movement and/or navigation of the transportation apparatus 100, one or more passengers, and/or any other type of users 108. In this example, the user 108a is a driver that controls the driving of the transportation apparatus 100, while other users 108, e.g., users 108b-d, are passengers. As still shown, there may be multiple rows of users 108 within the cabin 101 of the transportation apparatus 100.

As shown, in a row where the passengers 108b-d are located in the cabin 101, multiple passenger displays, such as displays 110a and 110n, may be provided for the passengers. In some embodiments, as shown in this example, each passenger in the row may be provided a passenger display mounted on a back panel of a seat in front of the passenger. In this example, the passenger display 110a is provided to passenger 108c, and the display 110n is provided to the passenger 108d. A given passenger display 110 provided in the cabin 101 may include a LCD screen similar to the one fitted on the dashboard as described above. As described herein, the given passenger display 110 may be connected to a user portable device associated with a passenger. For example, the passenger display 110a may be connected to a portable device associated with passenger 108c, and the passenger display 110n may be connected to a portable device associated with passenger 108d.

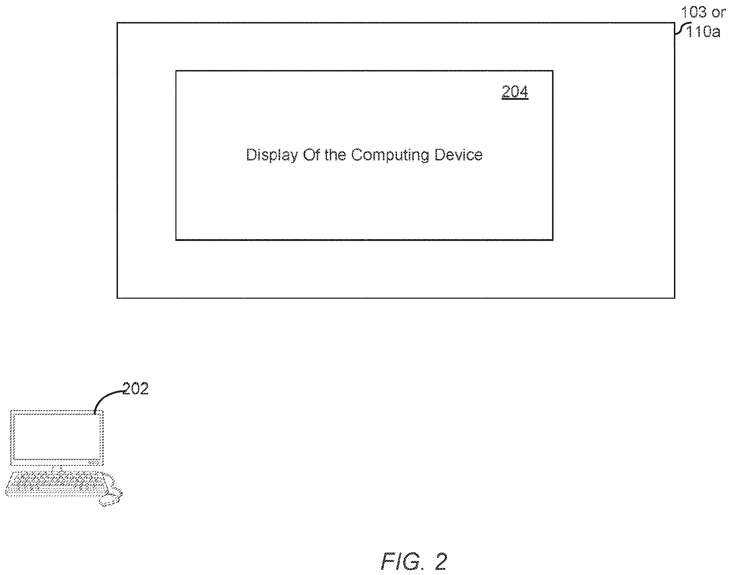

FIGS. 2 illustrates an example of connecting a computing device associated with a user, such as passenger 108c of the transportation apparatus 100 in accordance with the disclosure. In FIG. 2, the computing device 202 associated with passenger 108c may be connected with the display 103 or 110a via a Bluetooth connection, NFC communication, a WiFi connection and/or wired connections. As shown, an interface 204 may be provided through the display 103 or 110a to display the screen of computing device 202, which may be located remote to the transportation apparatus. As mentioned above, the computing device 202 may be associated with a user of the transportation apparatus 100, and may be located in an office or home of the user, or any other locations remote to the transportation apparatus 100. In some embodiments, the display 103 or 110a may be equipped with a wireless communication module to communicate with the computing device 202 on its own.

In implementations, the user may be enabled to control the computing device 202 from the display 103 or 110a when he/she is inside transportation apparatus 100. For example, the user may be enabled to work in a program or an application run on the computing device 202 remotely on the display 103 or 110a when the user is in the transportation apparatus 100. In some implementations, the display of computing device 202 may include displaying contents of computing device 202, for example a media such as multimedia file stored on the computing device 202. In some implementations, the display 204 may allow the user to selectively controls of one or more components in the transportation apparatus 100.

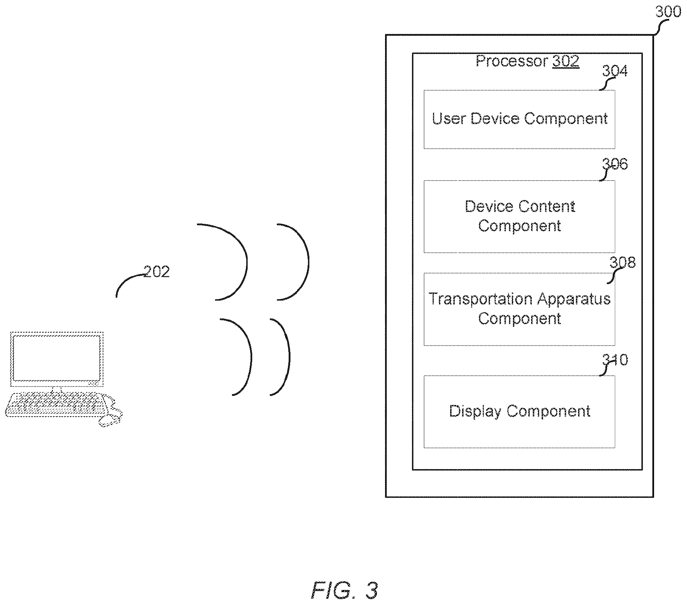

Attention is now directed to FIG. 3 that illustrates a server 300 that can be employed to facilitate remote displaying a content of the computing device 202 on display 110a or 103 in accordance with the disclosure. The server 302 may be located in a communication center configured to centrally control one or more of a transportation apparatus 100 shown in FIG. 1. As shown, the server 300 may include a processor 302 configured to execute computer programs, which may include a user device component 304, a device content component 306, a transportation apparatus component 308, a display component 310 and/or any other components.

The user device component 304 may be configured to connect user computing device(s) 202 associated with user(s) of driving apparatus 100 and/or manage the connected user computing device 202. As described and illustrated herein, the computing device 202 associated with the user may be connected to the server 300 wirelessly via a Bluetooth connection, NFC communication or a WiFi connection and/or connected to server 300 via a wired connection. In some embodiments, the user device component 302 may be configured to provide an interface, such as the interface 204, to present the content of the computing device 202 to the user within the transportation apparatus 100. The computing device 202 that can be connected and/or managed by the user device component 302 may include a smart phone, a tablet device, a laptop, a netbook, and/or any other type of portable device associated with the passengers.

The device content component 304 may be configured to stream contents on the computing device 202 to server 300 once the computing device 202 is connected via the user device component 302.

The transportation apparatus component 308 may be configured to management individual transportation apparatus 100. Managing the individual transportation apparatus 100 may include establishing an association between a particular computing device 202 and a particular transportation apparatus 100. In some implementations, the transportation apparatus component 308 may be further configured to communicate with the individual transportation apparatus 100 via a wireless link such as wifi or a wireless link facilitated by a drone network.

The display component 310 may be configured to stream the content from the computing device 202 to the transportation apparatus 100 and facilitate the display 103 or 110a to display the content on the display 103 or 110a. In some embodiments, the display component can be configured to enable the passenger to mirror the content displayed on the passenger display to a driver display as described and illustrated herein. In some embodiments, the display component 310 can be configured to provide an interface such as the interface 204 shown in FIG. 2 to enable the passenger to select a type of content (e.g., a particular program) on the computing device 202 to be displayed on the display 110 or 103 .

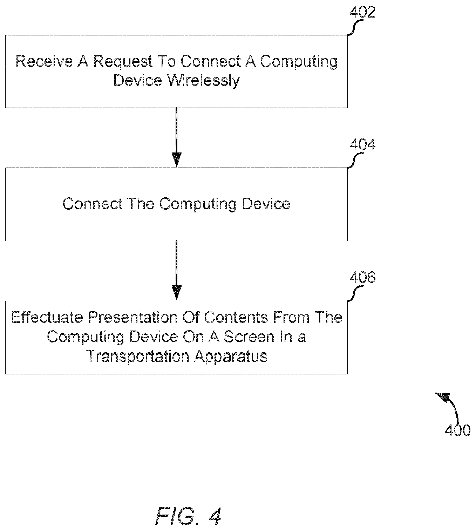

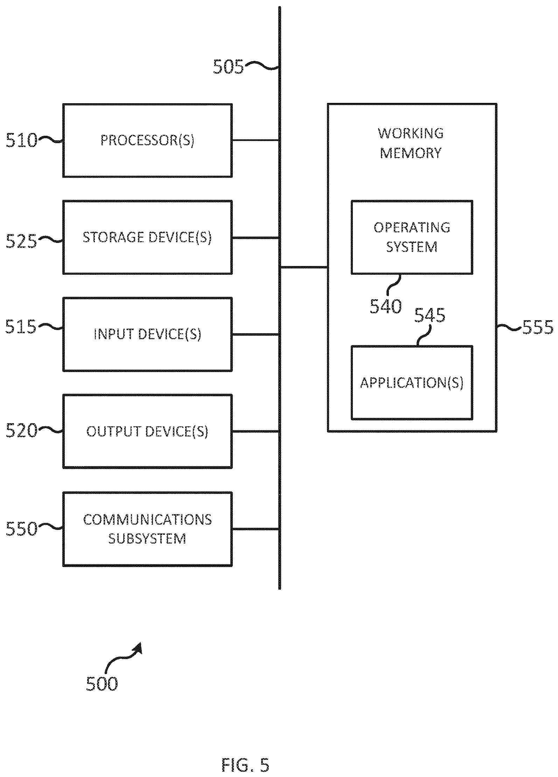

Attention is now is directed to FIG. 4 which illustrates one example for facilitating displaying a content of a computing device in a transportation apparatus. The particular series of processing steps depicted in FIG. 4 is not intended to be limiting. It is appreciated that the processing steps may be performed in an order different from that depicted in FIG. 4 and that not all the steps depicted in FIG. 4 need be performed. In certain implementations, the method 400 may be implemented by a computer system, such as the computer system shown in FIG. 5.

In some embodiments, the method depicted in method 400 may be implemented in one or more processing devices (e.g., a digital processor, an analog processor, a digital circuit designed to process information, an analog circuit designed to process information, a state machine, and/or other mechanisms for electronically processing information). The one or more processing devices may include one or more devices executing some or all of the operations of method 400 in response to instructions stored electronically on an electronic storage medium. The one or more processing devices may include one or more devices configured through hardware, firmware, and/or software to be specifically designed for execution of one or more of the operations of method 400.

At 402, a request can be received to connect a remote computing device, such as computing device 202. For example, the request received at 404 may include information regarding a channel number through which the computing device 202 can be connected. In some implementations, operations invovled in 404 can be implemented by a user device component the same as or substantially similar to user device component 304 described and illustrated herein.

At 406, the comptuing device can be connected via wireless and/or wired link. As described and illustrated herein, the computing device may be connected wirelessly via a Bluetooth connection, NFC communication or a WiFi connection, and/or a wired link. In some implementations, operations invovled in 406 can be implemented by a user device component the same as or substantially similar to user device component 304 described and illustrated herein.

At 406, contents on the user portable device that is connected at 406 can be streamed to a display in a transportation apparatus and can be facilited to be displayed thereon. In some implementations, operations invovled in 406 can be implemented by a device content component, a transportation apparatus component, a display component the same as or substantially similar to a a device content component 306, a transportation apparatus component 308, a display component 310 described and illustrated herein.

FIG. 5 illustrates a simplified computer system that can be used to implement various embodiments described and illustrated herein. A computer system 500 as illustrated in FIG. 5 may be incorporated into devices such as a portable electronic device, mobile phone, or other device as described herein. FIG. 5 provides a schematic illustration of one embodiment of a computer system 500 that can perform some or all of the steps of the methods provided by various embodiments. It should be noted that FIG. 5 is meant only to provide a generalized illustration of various components, any or all of which may be utilized as appropriate. FIG. 5, therefore, broadly illustrates how individual system elements may be implemented in a relatively separated or relatively more integrated manner.

The computer system 500 is shown comprising hardware elements that can be electrically coupled via a bus 505, or may otherwise be in communication, as appropriate. The hardware elements may include one or more processors 510, including without limitation one or more general-purpose processors and/or one or more special-purpose processors such as digital signal processing chips, graphics acceleration processors, and/or the like; one or more input devices 515, which can include without limitation a mouse, a keyboard, a camera, and/or the like; and one or more output devices 520, which can include without limitation a display device, a printer, and/or the like.

The computer system 500 may further include and/or be in communication with one or more non-transitory storage devices 525, which can comprise, without limitation, local and/or network accessible storage, and/or can include, without limitation, a disk drive, a drive array, an optical storage device, a solid-state storage device, such as a random access memory ("RAM"), and/or a read-only memory ("ROM"), which can be programmable, flash-updateable, and/or the like. Such storage devices may be configured to implement any appropriate data stores, including without limitation, various file systems, database structures, and/or the like.

The computer system 500 might also include a communications subsystem 550, which can include without limitation a modem, a network card (wireless or wired), an infrared communication device, a wireless communication device, and/or a chipset such as a Bluetooth™ device, an 502.11 device, a WiFi device, a WiMax device, cellular communication facilities, etc., and/or the like. The communications subsystem 550 may include one or more input and/or output communication interfaces to permit data to be exchanged with a network such as the network described below to name one example, other computer systems, television, and/or any other devices described herein. Depending on the desired functionality and/or other implementation concerns, a portable electronic device or similar device may communicate image and/or other information via the communications subsystem 550. In other embodiments, a portable electronic device, e.g. the first electronic device, may be incorporated into the computer system 500, e.g., an electronic device as an input device 515. In some embodiments, the computer system 500 will further comprise a working memory 555, which can include a RAM or ROM device, as described above.

The computer system 500 also can include software elements, shown as being currently located within the working memory 555, including an operating system 540, device drivers, executable libraries, and/or other code, such as one or more application programs 545, which may comprise computer programs provided by various embodiments, and/or may be designed to implement methods, and/or configure systems, provided by other embodiments, as described herein. Merely by way of example, one or more procedures described with respect to the methods discussed above, such as those described in relation to FIG. 5, might be implemented as code and/or instructions executable by a computer and/or a processor within a computer; in an aspect, then, such code and/or instructions can be used to configure and/or adapt a general purpose computer or other device to perform one or more operations in accordance with the described methods.

A set of these instructions and/or code may be stored on a non-transitory computer-readable storage medium, such as the storage device(s) 525 described above. In some cases, the storage medium might be incorporated within a computer system, such as computer system 500. In other embodiments, the storage medium might be separate from a computer system e.g., a removable medium, such as a compact disc, and/or provided in an installation package, such that the storage medium can be used to program, configure, and/or adapt a general purpose computer with the instructions/code stored thereon. These instructions might take the form of executable code, which is executable by the computer system 500 and/or might take the form of source and/or installable code, which, upon compilation and/or installation on the computer system 500 e.g., using any of a variety of generally available compilers, installation programs, compression/decompression utilities, etc., then takes the form of executable code.

It will be apparent to those skilled in the art that substantial variations may be made in accordance with specific requirements. For example, customized hardware might also be used, and/or particular elements might be implemented in hardware, software including portable software, such as applets, etc., or both. Further, connection to other computing devices such as network input/output devices may be employed.

As mentioned above, in one aspect, some embodiments may employ a computer system such as the computer system 500 to perform methods in accordance with various embodiments of the technology. According to a set of embodiments, some or all of the procedures of such methods are performed by the computer system 500 in response to processor 510 executing one or more sequences of one or more instructions, which might be incorporated into the operating system 540 and/or other code, such as an application program 545, contained in the working memory 555. Such instructions may be read into the working memory 555 from another computer-readable medium, such as one or more of the storage device(s) 525. Merely by way of example, execution of the sequences of instructions contained in the working memory 555 might cause the processor(s) 510 to perform one or more procedures of the methods described herein. Additionally or alternatively, portions of the methods described herein may be executed through specialized hardware.

The terms "machine-readable medium" and "computer-readable medium," as used herein, refer to any medium that participates in providing data that causes a machine to operate in a specific fashion. In an embodiment implemented using the computer system 500, various computer-readable media might be involved in providing instructions/code to processor(s) 510 for execution and/or might be used to store and/or carry such instructions/code. In many implementations, a computer-readable medium is a physical and/or tangible storage medium. Such a medium may take the form of a non-volatile media or volatile media. Non-volatile media include, for example, optical and/or magnetic disks, such as the storage device(s) 525. Volatile media include, without limitation, dynamic memory, such as the working memory 555.

Common forms of physical and/or tangible computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, EPROM, a FLASH-EPROM, any other memory chip or cartridge, or any other medium from which a computer can read instructions and/or code.

Various forms of computer-readable media may be involved in carrying one or more sequences of one or more instructions to the processor(s) 510 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system 500.

The communications subsystem 550 and/or components thereof generally will receive signals, and the bus 505 then might carry the signals and/or the data, instructions, etc. carried by the signals to the working memory 555, from which the processor(s) 510 retrieves and executes the instructions. The instructions received by the working memory 555 may optionally be stored on a non-transitory storage device 525 either before or after execution by the processor(s) 510.

Specific details are given in the description to provide a thorough understanding of exemplary configurations including implementations. However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Also, configurations may be described as a process which is depicted as a schematic flowchart or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, and equivalents may be used without departing from the spirit of the disclosure. For example, the above elements may be components of a larger system, wherein other rules may take precedence over or otherwise modify the application of the technology. Also, a number of steps may be undertaken before, during, or after the above elements are considered. Accordingly, the above description does not bind the scope of the claims.

As used herein and in the appended claims, the singular forms "a", "an", and "the" include plural references unless the context clearly dictates otherwise. Thus, for example, reference to "a user" includes a plurality of such users, and reference to "the processor" includes reference to one or more processors and equivalents thereof known to those skilled in the art, and so forth.

Also, the words "comprise", "comprising", "contains", "containing", "include", "including", and "includes", when used in this specification and in the following claims, are intended to specify the presence of stated features, integers, components, or steps, but they do not preclude the presence or addition of one or more other features, integers, components, steps, acts, or groups.

## Claims

1. A system for connecting a computing device to a display of a transportation apparatus, the system comprising one or more processors configured to execute machine-readable instructions such that when the machine-readable instructions are executed they cause the one or more processors to perform:
receiving a request to connect the computing device to the display of the transportation apparatus;
connecting the computing device to the display over a wireless network;
providing an interface on the display of the transportation apparatus, the interface being configured to enable a user associated with the computing device to control one or more programs on the computing device after the computing device is connected to the display of the transportation apparatus;
receiving a control instruction for controlling a component within the driving apparatus, the control instruction being provided by the user through the interface; and
effectuating an execution of the control instruction.

2. The system of claim 1, wherein the component within the driving apparatus includes an air-conditioning system, a seat, a passenger lamp, or an audio system.

3. The system of claim 1 or 2, wherein the computing device includes a smart phone, a tablet, or a laptop.

4. The system of any preceding claim, wherein the wireless network is a WiFi enabled network.

5. The system of any preceding claim, wherein the one or more processors are further configured to perform: providing the passenger interface on the user portable device after the user portable device is connected to the passenger display.

6. A method for connecting a computing device to a display of a transportation apparatus, the method being implemented by one or more processors configured to execute machine-readable instructions, the method comprising:
receiving a request to connect the computing device to the display of the transportation apparatus;
connecting the computing device to the display over a wireless network;
providing an interface on the display of the transportation apparatus, the interface being configured to enable a user associated with the computing device to control one or more programs on the computing device after the computing device is connected to the display of the transportation apparatus;
receiving a control instruction for controlling a component within the driving apparatus, the control instruction being provided by the user through the interface; and
effectuating an execution of the control instruction.

7. The method of claim 6, wherein the component within the driving apparatus includes an air-conditioning system, a seat, a passenger lamp, or an audio system.

8. The method of claim 6 or 7, wherein the computing device includes a smart phone, a tablet, or a laptop.

9. The method of any of claims 6 to 8, wherein the wireless network is a WiFi enabled network.

10. The method of any of claims 6 to 9, further comprising providing the passenger interface on the user portable device after the user portable device is connected to the passenger display.
